(19) **Europäisches Patentamt**
**European Patent Office**
**Office européen des brevets**

(11) **EP 1 570 739 B1**

(12) **EUROPEAN PATENT SPECIFICATION**

(45) Date of publication and mention
of the grant of the patent:
**05.12.2012 Bulletin 2012/49**

(51) Int Cl.:
***A01N 43/80*** (2006.01)     *A01N 43/80* (2006.01)
*A01N 43/80* (2006.01)

(21) Application number: **05250954.4**

(22) Date of filing: **19.02.2005**

(54) **Antimicrobial composition containing N-(n-Butyl)-1, 2-Benzisothiazolin-3-One**

antimikrobielle zusammensetzung enthaltend n-(n-butyl)1,2-benzisothiazolone

composition antimicrobienne contenant du n-(n-butyl)1,2-benzisothiazolone

(84) Designated Contracting States:
**DE FR GB IT**

(30) Priority: **05.03.2004 US 550503 P**

(43) Date of publication of application:
**07.09.2005 Bulletin 2005/36**

(60) Divisional application:
**11159051.9 / 2 351 486**

(73) Proprietor: **ROHM AND HAAS COMPANY**
**Philadelphia,**
**Pennsylvania 19106-2399 (US)**

(72) Inventors:
• **Chia, Li Liang**
  **Ambler**
  **Pennsylvania 19002 (US)**
• **Warwick, Eileen Fleck**
  **Lansdale**
  **Pennsylvania 19446 (US)**

(74) Representative: **Buckley, Guy Julian**
**Patent Outsourcing Limited**
**1 King Street**
**Bakewell**
**Derbyshire DE45 1DZ (GB)**

(56) References cited:
  **EP-A- 0 608 911**    **EP-A- 1 283 096**
  **WO-A- 02/17716**

• **PATENT ABSTRACTS OF JAPAN vol. 2002, no. 02, 2 April 2002 (2002-04-02) -& JP 2001 302418 A (PERMACHEM ASIA LTD), 31 October 2001 (2001-10-31)**
• **PATENT ABSTRACTS OF JAPAN vol. 013, no. 549 (C-662), 7 December 1989 (1989-12-07) -& JP 01 224306 A (OSAMU UMEKAWA), 7 September 1989 (1989-09-07)**
• **PATENT ABSTRACTS OF JAPAN vol. 2003, no. 12, 5 December 2003 (2003-12-05) -& JP 2004 123715 A (JAPAN ENVIRO CHEMICALS LTD), 22 April 2004 (2004-04-22)**

## Description

This invention relates to combinations of N-(n-butyl)-1,2-benzisothiazolin-3-one with selected antimicrobial compounds, the combinations having greater activity than would be observed for the individual antimicrobial compounds.

Use of combinations of at least two antimicrobial compounds can broaden potential markets, reduce use concentrations and costs, and reduce waste. In some cases, commercial antimicrobial compounds cannot provide effective control of microorganisms, even at high use concentrations, due to weak activity against certain types of microorganisms, e.g., those resistant to some antimicrobial compounds. Combinations of different antimicrobial compounds are sometimes used to provide overall control of microorganisms in a particular end use environment. For example, WO 02/17716 discloses a synergistic combination of N-(n-butyl)-1,2-benzisothiazolin-3-one (n-BBIT) and 2-methyl-4-isothiazolin-3-one (MI), but only over the limited range of ratios of n-BBIT to MI of 10:1 to 1.67:1. However, there is a need for additional combinations of antimicrobial compounds having enhanced activity against various strains of microorganisms to provide effective control of the microorganisms that is both quick and long lasting. Moreover, there is a need for combinations containing low levels of halogenated antimicrobial compounds. The problem addressed by this invention is to provide such additional combinations of antimicrobial compounds.

## STATEMENT OF THE INVENTION

The present invention, in its various aspects, is as set out in the accompanying claims.

The present invention is directed to an antimicrobial composition comprising: (a) N-(n-butyl)-1,2-benzisothiazolin-3-one; and (b) 4,5-dichloro-2-n-octyl-4-isothiazolin-3-one.

## DETAILED DESCRIPTION OF THE INVENTION

"MI" is 2-methyl-4-isothiazolin-3-one, also referred to by the name 2-methyl-3-isothiazolone. "CMI" is 5-chloro-2-methyl-4-isothiazolin-3-one. "DCOIT" is 4,5-dichloro-2-n-octyl-4-isothiazolin-3-one. "n-BBIT" is N-(n-butyl)-1,2-benzisothiazolin-3-one.

As used herein, the following terms have the designated definitions, unless the context clearly indicates otherwise. The term " antimicrobial compound" refers to a compound capable of inhibiting the growth of or controlling the growth of microorganisms at a locus; antimicrobial compounds include bactericides, bacteristats, fungicides, fungistats, algaecides and algistats, depending on the dose level applied, system conditions and the level of microbial control desired. The term "microorganism" includes, for example, fungi (such as yeast and mold), bacteria and algae. The term "locus" refers to an industrial system or product subject to contamination by microorganisms. The following abbreviations are used throughout the specification: ppm = parts per million by weight (weight/weight), mL = milliliter, ATCC = American Type Culture Collection, and MIC = minimum inhibitory concentration. Unless otherwise specified, temperatures are in degrees centigrade (°C), and references to percentages (%) are by weight. Percentages of antimicrobial compounds in the composition of this invention are based on the total weight of active ingredients in the composition, i.e., the antimicrobial compounds themselves, exclusive of any amounts of solvents, carriers, dispersants, stabilizers or other materials which may be present. "Salt-free" means that the composition contains zero or up to 0.5%, preferably zero or up to 0.1%, and more preferably zero or up to 0.01 %, of metal salt, based on weight of the composition.

The compositions of the present invention unexpectedly have been found to provide enhanced antimicrobial efficacy at a combined active ingredient level lower than that of the individual antimicrobial compounds. In one embodiment of the invention, those antimicrobial compositions which contain halogenated 3-isothiazolones contain relatively low levels thereof, preferably no more than 5%, more preferably no more than 2%, and most preferably no more than 1.2%. Another preferred level is no more than 0.5%, and another is no more than 0.1 %. Antimicrobial compositions dependent on the presence of halogenated 3-isothiazolone are susceptible to chemical degradation and may require additional stabilizer components, such as the aforementioned metal salt stabilizers; salt stabilizers sometimes create unacceptable properties in finished formulations. For this reason it is desirable to provide antimicrobial formulations substantially free of halogenated 3-isothiazolone, but that still provide the degree of antimicrobial protection provided by the halogenated 3-isothiazolones. In one embodiment of the invention, the total level of all halogenated antimicrobial compounds is no more than 5%, more preferably no more than 2%, more preferably no more than 1.2%. Another preferred level is no more than 0.5%, and another is no more than 0.1%.

In the invention, the antimicrobial composition comprises N-(n-butyl)-1,2-benzisothiazolin-3-one and 4,5-dichloro-2-n-octyl-4-isothiazolin-3-one. Preferably, a weight ratio of N-(n-butyl)- 1,2-benzisothiazolin-3-one to 4,5-dichloro-2-n-octyl-4-isothiazolin-3-one is from 6000:1 to 30:1. Another preferred weight ratio is from 3000:1 to 35:1, another is from 300:1 to 30:1, and another from 300:1 to 35:1.

The antimicrobial compounds in the composition of this invention may be used "as is" or may first be formulated with a solvent or a solid carrier. Suitable solvents include, for example, water; glycols, such as ethylene glycol, propylene glycol, diethylene glycol, dipropylene glycol, polyethylene glycol, and polypropylene glycol; glycol ethers; alcohols, such as methanol, ethanol, propanol, phenethyl alcohol and phenoxypropanol; ketones, such as acetone and methyl ethyl ketone; esters, such as ethyl acetate, butyl acetate, triacetyl citrate, and glycerol triacetate; carbonates, such as propylene carbonate and dimethyl carbonate; and mixtures thereof. It is preferred that the solvent is selected from water, glycols, glycol ethers, esters and mixtures thereof. Suitable solid carriers include, for example, cyclodextrin, silicas, diatomaceous earth, waxes, cellulosic materials, alkali and alkaline earth (e.g., sodium, magnesium, potassium) metal salts (e.g., chloride, nitrate, bromide, sulfate) and charcoal.

When an antimicrobial component is formulated in a solvent, the formulation may optionally contain surfactants. When such formulations contain surfactants, they are generally in the form of emulsive concentrates, emulsions, microemulsive concentrates, or microemulsions. Emulsive concentrates form emulsions upon the addition of a sufficient amount of water. Microemulsive concentrates form microemulsions upon the addition of a sufficient amount of water. Such emulsive and microemulsive concentrates are generally well known in the art; it is preferred that such formulations are free of surfactants. U.S. Patent No. 5,444,078 may be consulted for further general and specific details on the preparation of various microemulsions and microemulsive concentrates.

An antimicrobial compound also can be formulated in the form of a dispersion. The solvent component of the dispersion can be an organic solvent or water, preferably water. Such dispersions can contain adjuvants, for example, co-solvents, thickeners, anti-freeze agents, dispersants, fillers, pigments, surfactants, biodispersants, sulfosuccinates, terpenes, furanones, polycations, stabilizers, scale inhibitors and anti-corrosion additives.

The antimicrobial compounds may be formulated separately or together. When both antimicrobial compounds are each first formulated with a solvent, the solvent used for the first antimicrobial compound may be the same as or different from the solvent used to formulate the other commercial antimicrobial compound. It is preferred that the two solvents are miscible. In the alternative, the first antimicrobial compound and the other antimicrobial compound may be combined directly and then a solvent added to the mixture.

Those skilled in the art will recognize that the antimicrobial compounds of the present invention may be added to a locus sequentially, simultaneously, or may be combined before being added to the locus. It is preferred that the first antimicrobial compound and the second antimicrobial compound be added to a locus simultaneously or combined prior to being added to the locus. When the antimicrobial compounds are combined prior to being added to a locus, such combination may optionally contain adjuvants, such as, for example, solvent, thickeners, anti-freeze agents, colorants, sequestrants (such as ethylenediaminetetraacetic acid, ethylenediaminedisuccinic acid, iminodisuccinic acid and salts thereof), dispersants, surfactants, biodispersants, sulfosuccinates, terpenes, furanones, polycations, stabilizers, scale inhibitors and anti-corrosion additives.

The antimicrobial compositions of the present invention can be used to inhibit the growth of microorganisms by introducing an antimicrobially effective amount of the compositions onto, into, or at a locus subject to microbial attack. Suitable loci include, for example: cooling towers; air washers; mineral slurries; wastewater treatment; ornamental fountains; reverse osmosis filtration; ultrafiltration; ballast water; evaporative condensers; heat exchangers; pulp and paper processing fluids; plastics; emulsions; dispersions; paints; latices; coatings, such as varnishes; construction products, such as mastics, caulks, and sealants; construction adhesives, such as ceramic adhesives, carpet backing adhesives, and laminating adhesives; industrial or consumer adhesives; photographic chemicals; printing fluids; household products, such as bathroom and kitchen cleaners; cosmetics; toiletries; shampoos; soaps; detergents; industrial cleaners; floor polishes; laundry rinse water; metalworking fluids; conveyor lubricants; hydraulic fluids; leather and leather products; textiles; textile products; wood and wood products, such as plywood, chipboard, flakeboard, laminated beams, oriented strandboard, hardboard, and particleboard; petroleum processing fluids; fuel; oilfield fluids, such as injection water, fracture fluids, and drilling muds; agriculture adjuvant preservation; surfactant preservation; medical devices; diagnostic reagent preservation; food preservation, such as plastic or paper food wrap; pools; and spas.

Preferably, the antimicrobial compositions of the present invention are used to inhibit the growth of microorganisms at a locus selected from one or more of emulsions, dispersions, paints, latices, household products, cosmetics, toiletries, shampoos, soaps, detergents, machining fluids and industrial cleaners. In particular, the antimicrobial compositions are useful in emulsions, dispersions, paints and latices.

When the synergistic compositions of the present invention are used in personal care compositions, the formulated compositions may also comprise one or more ingredients selected from UV radiation-absorbing agents, surfactants, rheology modifiers or thickeners, fragrances, moisturizers, humectants, emollients, conditioning agents, emulsifiers, antistatic aids, pigments, dyes, tints, colorants, antioxidants, reducing agents and oxidizing agents.

The specific amount of the composition of this invention necessary to inhibit or control the growth of microorganisms in a locus depends upon the particular locus to be protected. Typically, the amount of the composition of the present invention to control the growth of microorganisms in a locus is sufficient if it provides from 0.1 to 10,000 ppm active ingredient of the composition in the locus. It is preferred that the active ingredients of the composition be present in the locus in an amount of at least 0.5 ppm, more preferably at least 1 ppm, more preferably at least 10 ppm and most preferably at least 50 ppm. It is preferred that the active ingredients of the composition be present in the locus in an amount of no more than 5000 ppm, more preferably no more than 3000 ppm, more preferably no more than 1000 ppm, and most preferably no more than 500 ppm.

EXAMPLES

The synergism of the combination of the present invention was demonstrated by testing a wide range of concentrations and ratios of the compounds.

One measure of synergism is the industrially accepted method described by Kull, F.C.; Eisman, P.C.; Sylwestrowicz, H.D. and Mayer, R.L., in Applied Microbiology 9:538-541 (1961), using the ratio determined by the formula:

$$Q_a/Q_A + Q_b/Q_B = \text{Synergy Index ("SI")}$$

wherein:

$Q_A$ = concentration of compound A (first component) in ppm, acting alone, which produced an end point (MIC of Compound A).

$Q_a$ = concentration of compound A in ppm, in the mixture, which produced an end point.

$Q_B$ = concentration of compound B (second component) in ppm, acting alone, which produced an end point (MIC of Compound B).

$Q_b$ = concentration of compound B in ppm, in the mixture, which produced an end point.

When the sum of $Q_a/Q_A$ and $Q_b/Q_B$ is greater than one, antagonism is indicated. When the sum is equal to one, additivity is indicated, and when less than one, synergism is demonstrated. The lower the SI, the greater the synergy shown by that particular mixture. The minimum inhibitory concentration (MIC) of an antimicrobial compound is the lowest concentration tested under a specific set of conditions that prevents the growth of added microorganisms.

Synergy tests were conducted using standard microtiter plate assays (12 columns, 1-12 x 8 rows, A-H) with media designed for optimal growth of the test microorganism. Full-strength nutrient medium, Trypticase Soy Broth, TSB, for bacteria, or Potato Dextrose Broth, PDB, for fungi, was used for testing. Growth medium (160 μL) was dispensed into columns 2-6 and 8-12 of the plate. A total of 40 plates were made with each growth medium. Stock solutions of N-(n-butyl)-1,2-benzisothiazolin-3-one were made from DENSIL DG 20 (20% active ingredient (AI), n-BBIT, in propylene glycol, obtained from Avecia Inc.) at the following concentrations based on total product weight: 5000 ppm (0.2 g DENSIL DG 20 in 40 g growth medium), 4000 ppm, 3500 ppm, 3000 ppm, 2500 ppm, 2000 ppm, 1500 ppm, 1000 ppm and 900 ppm. Isothiazolone stock solutions were made as follows. KATHON LX (1.97% active, 3:1 CMI/MI mixture): active ingredient concentrations at 144 ppm, 36 ppm, 10 ppm, 5 ppm and 1 ppm. ROZONE 2000 (20% active, DCOIT): active ingredient concentrations at 144 ppm, 36 ppm, 10 ppm, 5 ppm and 1 ppm. ROCIMA 550 (9.5% active, MI): active ingredient concentrations at 4800 ppm, 2400 ppm, 900 ppm, 360 ppm and 180 ppm. DENSIL DG 20 stock solution was dispensed in each well of columns 1 and 7 of a microtiter plate, as described below:

| | |
|---|---|
| 1A, 7A - 4000 ppm stock | 1E, 7E - 2000 ppm |
| 1B, 7B - 3500 ppm | 1F, 7F - 1500 ppm |
| 1C, 7C - 3000 ppm | 1G, 7G - 1000 ppm |
| 1D, 7D - 2500 ppm | 1H, 7H - 900 ppm |

5000 ppm of stock solution was tested against *Ps. aeruginosa* in 1A, 7A. The 900 ppm stock was not tested against this organism. A 40 μL aliquot was transferred from each well in column 1 to column 2 and serially diluted to column 5; the aliquots from column 5 was discarded. Column 6 was the control. The same procedure was repeated from column 7 to column 11, and the aliquots from column 11 discarded. At the end of this procedure, each well should contain 160 μL of solution.

The isothiazolone stock solutions were added to various columns so that each well contained the desired concentration of the isothiazolone and the DENSIL DG20. The DENSIL DG20 alone as well as the isothiazolone alone were included as controls. An example of the combination of 11 ppm KATHON LX 1.5% (on an active ingredient basis) with DENSIL DG20 is shown below:

Concentrations of DENSIL DG20 and CMI/MI

|  | 1 | 2 | 3 | 4 | 5 | 6 | 7 | 8 | 9 | 10 | 11 | 12 |
|---|---|---|---|---|---|---|---|---|---|---|---|---|
| A | 3556 | 711.1 | 142.2 | 28.4 | 5.7 | 0 | 3556/11 | 711/11 | 142/11 | 211/11 | 5.7/11 | 0/11 |
| B | 3111 | 622.2 | 124.4 | 24.9 | 5.0 | 0 | 3111/11 | 622/11 | 124/11 | 25/11 | 5/11 | 0/11 |
| C | 2667 | 533.3 | 106.7 | 21.3 | 4.3 | 0 | 2667/11 | 533/11 | 107/11 | 21/11 | 4.3/11 | 0/11 |
| D | 2222 | 444.4 | 889 | 17.8 | 3.6 | 0 | 2222/11 | 444/11 | 89/11 | 18/11 | 3.6/11 | 0/11 |
| E | 1778 | 355.6 | 71.1 | 14.2 | 2.8 | 0 | 1778/11 | 356/11 | 71/11 | 14/11 | 2.8/11 | 0/11 |
| F | 1333 | 266.7 | 53.3 | 10.7 | 2.1 | 0 | 1333/11 | 267/11 | 53/11 | 11/11 | 2.1/11 | 0/11 |
| G | 889 | 177.8 | 35.6 | 7.1 | 1.4 | 0 | 889/11 | 178/11 | 36/11 | 7/11 | 1.4/11 | 0/11 |
| H | 800 | 160 | 32 | 6.4 | 1.28 | 0 | 800/11 | 160/11 | 32/11 | 6.4/11 | 1.3/11 | 0/11 |

DENSIL DG20 alone (columns 1-5); untreated control (column 6); combination evaluations (columns 7-11); KATHON LX 1.5% control (column 12). Inoculum (10 μL) was dispensed into each well from column 1-12. The plates were incubated (bacterial plates at 48 hrs., 30°C; fungal plates at 7 days, 25°C). The MIC of each biocide was determined from the plates, and then SI was determined.

The following concentrations of the isothiazolones with DENSIL DG20, as described above in the microtiter plate in columns 1-5, were evaluated:

| CMI/MI and DCOIT | MI |
|---|---|
| 11.2 | 400 |
| 8.8 | 300 |
| 6.4 | 200 |
| 4.8 | 160 |
| 4 | 133 |
| 2 | 107 |
| 1 | 80 |
| 0.5 | 67 |
| 0.35 | 60 |
| 0.28 | 50 |
| 0.13 | 40 |
| 0.06 | 30 |
| 0.03 | 25 |
|  | 20 |
|  | 16 |
|  | 10 |
|  | 5 |

Concentrations of the anti-microbial agents evaluated may vary slightly against different test organisms depending on their efficacy (lower concentrations against bacteria were used if the agent was more effective against bacteria. On the contrary, higher concentrations were needed in the test if the agent was less effective against bacteria).

The following Tables summarize data for combinations of n-BBIT with other isothiazolones (ITA), along with their synergy index (SI) and the ratio of n-BBIT:ITA. All amounts of n-BBIT and ITA are reported as ppm of active ingredient. Results for testing against various organisms are grouped with results against fungi (F) reported together, and then results against bacteria (B).

| | | Alone | | | Combinations | | Organisms | Contact Time | S.I. | Ratio n-BBIT: ITA |
|---|---|---|---|---|---|---|---|---|---|---|
| | | ITA | ITA ppm | n-BBIT ppm | ITA ppm | n-BBIT ppm | | | | |
| F | CMI/MI | 1 | 28 | 0.03 | 25 | *A. niger* | 3 days | 0.9 | 833:1 |
| | | | | 0.06 | 25 | | | 0.9 | 417:1 |
| | | | | 0.13 | 18 | | | 0.8 | 139:1 |
| | | | | 0.28 | 18 | | | 0.9 | 64:1 |
| | | | | 0.5 | 28 | | | 1.5 | 56:1 |
| | | 0.28 | 444 | 0.03 | 356 | *F. moniliforme* | 3 days | 0.9 | 11867:1 |
| | | | | 0.06 | 356 | | | 1.0 | 5933:1 |
| | | | | 0.13 | 267 | | | 1.1 | 2054:1 |
| | | 1 | 533 | 0.06 | 444 | | 7 days | 0.9 | 7400:1 |
| | | | | 0.28 | 267 | | | 0.8 | 954:1 |
| | | | | 0.5 | 178 | | | 0.8 | 356:1 |
| | | | | 0.03 | 533 | | | 1.1 | 17767:1 |
| | | | | 0.13 | 533 | | | 1.0 | 4100:1 |
| B | CMI/MI | 5 | 267 | 1 | 178 | *K. pneumoniae* | 24 hr | 0.9 | 178:1 |
| | | | | 0.5 | 267 | | | 1.1 | 534:1 |
| | | 11 | 267 | 1 | 178 | | 48 hr | 0.8 | 178:1 |
| | | | | 2 | 178 | | | 0.8 | 89:1 |
| | | 5 | 356 | 0.3 | 71 | *E. coli* | 24 hr | 1.1 | 237:1 |
| | | | | 0.5 | 53 | | | 0.9 | 106:1 |
| | | | | 1 | 89 | | | 1.4 | 89:1 |
| | | 5 | 533 | 0.1 | 89 | | 48 hr | 0.9 | 890:1 |
| | | | | 0.3 | 89 | | | 0.9 | 297:1 |
| | | | | 0.5 | 71 | | | 0.8 | 142:1 |
| | | | | 1 | 107 | | | 1.2 | 107:1 |
| | | | | 2 | 89 | | | 1.2 | 45:1 |
| F | DCOIT | 0.28 | 267 | 0.03 | 178 | *F. moniliforme* | 3 days | 0.8 | 5933:1 |
| | | | | 0.06 | 178 | | | 0.8 | 2967:1 |
| | | | | 0.13 | 160 | | | 1.1 | 1231:1 |
| | | | | 0.28 | 142 | | | 1.5 | 507:1 |
| | | 1 | 356 | 0.06 | 267 | | 7 days | 0.8 | 4450:1 |
| | | | | 0.13 | 267 | | | 0.9 | 2054:1 |
| | | | | 0.5 | 124 | | | 0.8 | 248:1 |
| | | | | 1 | 36 | | | 0.8 | 36:1 |
| | | | | 0.03 | 356 | | | 1.0 | 11867:1 |
| | | | | 0.28 | 356 | | | 1.3 | 1271:1 |
| B | DCOIT | 6 | 36 | 0.1 | 32 | *S. aureus* | 24 hr | 0.9 | 320:1 |
| | | | | 0.3 | 36 | | | 1.1 | 120:1 |
| | | 9 | 53 | 0.3 | 36 | | 48 hr | 0.7 | 120:1 |
| | | | | 0.5 | 53 | | | 1.1 | 106:1 |
| | | | | 1 | 36 | | | 0.8 | 36:1 |
| | | | | 2 | 53 | | | 1.2 | 27:1 |
| | | 11 | 267 | 0.5 | 267 | *K pneumoniae* | 48 hr | 1.0 | 534:1 |
| | | | | 1 | 178 | | | 0.8 | 178:1 |
| | | | | 2 | 178 | | | 0.8 | 89:1 |
| | | | | 4 | 267 | | | 1.4 | 67:1 |
| | | 5 | 18 | 0.1 | 14 | *P. mirabilis* | 48 hr | 0.9 | 140:1 |

(continued)

| | | Alone | | | Combinations | | Organisms | Contact Time | S.I. | Ratio n-BBIT: ITA |
|---|---|---|---|---|---|---|---|---|---|---|
| | | ITA | ITA ppm | n-BBIT ppm | ITA ppm | n-BBIT ppm | | | | |
| | | | | | 1 | 14 | | | 1.0 | 14:1 |
| | | | | | 0.3 | 18 | | | 1.1 | 60:1 |
| F | MI | 200 | 53 | | 50 | 36 | *A. niger* | 7 days | 0.9 | 1:1.4 |
| | | | | | 60 | 32 | | | 0.9 | 1:1.9 |
| | | | | | 107 | 18 | | | 0.9 | 1:5.9 |
| | | | | | 133 | 11 | | | 0.9 | 1:12 |
| | | | | | 160 | 7 | | | 0.9 | 1:23 |
| | | | | | 80 | 32 | | | 1.0 | 1:2.5 |
| | | | | | 200 | 7 | | | 1.1 | 1:29 |
| | | 200 | 267 | | 50 | 53 | *F. moniliforme* | 3 days | 0.4 | 1.1:1 |
| | | | | | 60 | 56 | | | 0.4 | 1:1.1 |
| | | | | | 80 | 32 | | | 0.5 | 1:2.5 |
| | | | | | 107 | 36 | | | 0.7 | 1:3 |
| | | | | | 133 | 7 | | | 0.7 | 1:19 |
| | | | | | 160 | 5 | | | 0.8 | 1:32 |
| | | 200 | 267 | | 50 | 52 | | 7 days | 0.4 | 1:1 |
| | | | | | 60 | 36 | | | 0.4 | 1:1.7 |
| | | | | | 80 | 32 | | | 0.5 | 1:2.5 |
| | | | | | 107 | 32 | | | 0.7 | 1:3.3 |
| | | | | | 133 | 11 | | | 0.7 | 1:12 |
| | | | | | 160 | 6 | | | 0.8 | 1:27 |
| | | | | | 160 | 53 | | | 1.0 | 1:3 |
| | | 107 | 711 | | 50 | 142 | *G. viridie* | 3 days | 0.7 | 2.8:1 |
| | | | | | 60 | 160 | | | 0.8 | 2.7:1 |
| | | | | | 80 | 142 | | | 0.9 | 1.8:1 |
| | | 133 | >711 | | 50 | 160 | | 7 days | <0.6 | 3.2:1 |
| | | | | | 60 | 160 | | | <0.7 | 2.7:1 |
| | | | | | 80 | 160 | | | <0.8 | 2:1 |
| | | | | | 107 | 178 | | | <1.1 | 1.7:1 |
| | | 25 | 124 | | 10 | 53 | *C. albicans* | 7 days | 0.8 | 5.3:1 |
| | | | | | 16 | 53 | | | 1.1 | 3.3:1 |
| B | MI | 20 | 711 | | 5 | 444 | *Ps. aeruginosa* | 24 hr | 0.8 | 89:1 |
| | | 25 | 711 | | 5 | 444 | | 48 hr | 0.8 | 89:1 |
| | | | | | 10 | 444 | | | 1.0 | 44:1 |
| | | | | | 16 | 533 | | | 1.4 | 33:1 |
| | | 25 | 267 | | 5 | 178 | *K pneumoniae* | 24 hr | 0.9 | 36:1 |
| | | | | | 10 | 107 | | 48 hr | 0.8 | 11:1 |
| | | | | | 16 | 89 | | | 1.0 | 5.6:1 |

(continued)

| | Alone | | | Combinations | | | | | Ratio n-BBIT: ITA |
|---|---|---|---|---|---|---|---|---|---|
| | ITA | ITA ppm | n-BBIT ppm | ITA ppm | n-BBIT ppm | Organisms | Contact Time | S.I. | |
| | | | | 20 | 107 | | | 1.2 | 5.4:1 |

| |
|---|
| *Ps. aeruginosa - Pseudomonas aeruginosa* (ATCC#15442) |
| *S aureus - Staphylococcus aureus* (ATCC#6538) |
| *K. pneumoniae - Klebsiella pneumoniae* (ATCC#13583) |
| *E. coli - Escherichia coli* (ATCC#8739) |
| *P. mirabilis - Proteus mirabilis* (ATCC#unknown) |
| Fungi |
| *A. niger - Aspergillus niger* (ATCC#16404) |
| *F. moniliforme - Fusarium moniliforme* (ATCC#58929) |
| *G. viridie (T. viridie) - Gliocladium viridie (Tricoderma viridie)* (isolate) |
| *C. albicans - Candida albicans* (ATCC#10231) |

Typical contact time for bacteria is 24 - 48 hours and 3 - 7 days for fungi. Bacterial inoculum was approximately $1 \times 10^6$ to $1 \times 10^7$ cfu/ml per well of the microtiter plate.

Fungal inoculum was approximately $1 \times 10^5$ to $1 \times 10^6$ cfu/ml per well of the microtiter plate.

## Claims

**1.** An antimicrobial composition comprising:

(a) N-(n-butyl)-1,2-benzisothiazolin-3-one; and
(b) 4,5-dichloro-2-n-octyl-4-isothiazolin-3-one.

**2.** The antimicrobial composition of claim 1 in which a weight ratio ofN-(n-butyl)-1,2-benzisothiazolin-3-one to 4,5-dichloro-2-n-octyl-4-isothiazolin-3-one is from 6000:1 to 30:1.

**3.** The antimicrobial composition of claim 2 in which a weight ratio ofN-(n-butyl)-1,2-benzisothiazolin-3-one to 4,5-dichloro-2-n-octyl-4-isothiazolin-3-one is from 300:1 to 35:1.

## Patentansprüche

**1.** Antimikrobielle Zusammensetzung, umfassend

(a) N-(n-Butyl)-1,2-benzoisothiazolin-3-on und
(b) 4,5-Dichloro-2-n-octyl-4-isothiazolin-3-on.

**2.** Antimikrobielle Zusammensetzung nach Anspruch 1, in der ein Gewichtsverhältnis von N-(n-Butyl)-1,2-benzoisothiazolin-3-on zu 4,5-Dichloro-2-n-octyl-4-isothiazolin-3-on 6000:1 bis 30:1 beträgt.

**3.** Antimikrobielle Zusammensetzung nach Anspruch 2, in der ein Gewichtsverhältnis von N-(n-Butyl)-1,2-benzoisothiazolin-3-on zu 4,5-Dichloro-2-n-octyl-4-isothiazolin-3-on 300:1 bis 35:1 beträgt.

## Revendications

**1.** Composition antimicrobienne comprenant :

(a) de la N-(n-butyl)-1,2-benzisothiazolin-3-one ; et
(b) de la 4,5-dichloro-2-n-octyl-4-isothiazolin-3-one.

**2.** Composition antimicrobienne selon la revendication 1 dans laquelle un rapport en poids de la N-(n-butyl)-1,2-benzisothiazolin-3-one à la 4,5-dichloro-2-n-octyl-4-isothiazolin-3-one est de 6000:1 à 30:1.

**3.** Composition antimicrobienne selon la revendication 2 dans laquelle un rapport en poids de la N-(n-butyl)-1,2-benzisothiazolin-3-one à la 4,5-dichloro-2-n-octyl-4-isothiazolin-3-one est de 300:1 à 35:1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0217716 A

- US 5444078 A

**Non-patent literature cited in the description**

- **KULL, F.C. ; EISMAN, P.C. ; SYLWESTROWICZ, H.D. ; MAYER, R.L.** *Applied Microbiology,* 1961, vol. 9, 538-541